# EUROPEAN PATENT APPLICATION

(11) **EP 2 199 078 A1**
(43) Date of publication of application: **23.06.2010**
(21) Application number: 08172506.1
(22) Date of filing: 22.12.2008
(51) Int. Cl.: B32B 27/32, B32B 27/36, B32B 27/08, B65D 65/46

(54) **Polyethylene and poly(hydroxy carboxylic acid) multilayer films**

(71) Applicant: Total Petrochemicals Research Feluy, 7181 Seneffe (Feluy) (BE)
(72) Inventor: De Groof, Leen, B - 3001 Heverlee (BE); Brusson, Jean-Michel, B - 1410 Waterloo (BE)

(57) **Abstract**

A multilayer film comprising a first layer comprising a poly(hydroxy carboxylic acid) and a second layer adjacent to the first layer comprising polyethylene prepared with a single-site catalyst, preferably a metallocene catalyst.

## Description

### FIELD OF THE INVENTION

This invention is related to a multilayer film comprising material obtainable from a renewable resource. In particular the invention is directed to a multilayer film having a layer comprising poly(lactic acid) and a layer comprising polyethylene prepared with a single-site catalyst, preferably a metallocene catalyst.

### BACKGROUND OF THE INVENTION

In the past few years, the general public has become increasingly apprehensive of the impact man-made waste has on the environment. Hence there is a growing interest in developing novel biodegradable (and preferably compostable) plastics from renewable resources for films.

One particularly interesting candidate for this task is poly(hydroxy carboxylic acid), in particular poly(lactic acid) (PLA), now commercially available on a relatively large scale. The lactic acid is obtained from plants such as corn and sugar-cane or other sugar- or starch-producing plants. Not only is PLA obtainable from renewable materials, it is also industrially compostable. For these reasons, there is significant interest in using PLA as a substitute in applications, where petroleum-based thermoplastics have conventionally been used.

Unfortunately, PLA used on its own does not have the same advantageous properties as conventional plastics do. In particular PLA has performance problems related to heat resistance, brittleness and limited flexibility, resulting in poor mechanical strength. On the other hand, polyolefins, such as polyethylene, have much better mechanical properties. It has been attempted to combine these properties by co-extruding PLA with polyethylene to obtain a multilayer film that is at least partially obtainable from renewable resources, but still has acceptable mechanical properties. However, it is known that a PLA layer with a conventional polyethylene, such as Ziegler-Natta-catalysed polyethylene, provides films with poor adherence between the layers due to the differences in polarity. In the past, compatibilisers were used in one or more layers or a tie/compatibilising layer was introduced between the layers to increase the adherence between the PLA and the polyethylene layers. However, this requires an additional industrial step, as well as specific conditions during extrusion. Furthermore, the addition of compatibilising agents is expensive and changes the properties of the desired product. Thus both the compatibilising agent and the by-products change the properties of the desired end product.

US2008/0026171 discloses a multilayer film comprising, in order, a polyolefin or extrudable layer, a first layer comprising ethylene vinyl acetate (EVA), and a layer comprising polylactic acid (PLA). In a preferred embodiment, the multilayer film comprises, in order, a polyolefin layer, a first layer comprising ethylene vinyl acetate (EVA), a core layer comprising polylactic acid (PLA), a second layer comprising EVA, and a sealant layer. A method and system for forming the multilayer film is also disclosed. The EVA layer is used as a compatibilising layer or tie layer between the polyolefin layer and the PLA layer.

Thus, it is an object of the invention to co-extrude films of polyethylene and poly(hydroxy carboxylic acid) layers without having to use a tie/compatibilising layer or between the film's layers or compatibilising agents in the layers.

It is also an object of the invention, to develop a multilayer film comprising a layer having a polyethylene and an adjacent layer having a poly(hydroxy carboxylic acid) with better adherence between said two layers.

It is furthermore an object of the invention to develop a film that is at least partially obtainable from renewable resources and has better or at least similar mechanical properties than hitherto known resins obtainable from renewable resources.

It is further an object of the invention to develop a film that has better gas barrier properties than polyethylene films.

It is also an object of the invention to develop a film with better surface tension properties than polyethylene films.

At least one of the above objects is achieved with the implementation of the current invention.

### SUMMARY OF THE INVENTION

The present invention provides a multilayer film comprising a first layer comprising a poly(hydroxy carboxylic acid) and a second layer adjacent to the first layer comprising polyethylene prepared with a single-site catalyst, in particular a metallocene catalyst.

Advantageously, the first layer comprises at least 50 wt %, preferably at least 75 wt%, more preferably at least 80 wt% of a poly(hydroxy carboxylic acid), and/or the second layer comprises at least 50 wt%, preferably at least 75 wt%, more preferably at least 80 wt% of a polyethylene prepared with a single-site catalyst, in particular a metallocene catalyst

According to another embodiment, the first layer consists essentially of a poly(hydroxy carboxylic acid) and/or the second layer consists essentially of a polyethylene prepared with a single-site catalyst, in particular a metallocene catalyst.

The invention also covers the process for making the multilayer film and the use of said film as packaging material.

### DETAILED DESCRIPTION OF THE INVENTION

As described above, the present invention is a multilayer film comprising a first layer comprising a poly(hydroxy carboxylic acid) and a second layer adjacent to the first layer comprising polyethylene prepared with a single-site catalyst, in particular metallocene catalysts.

Until now, it has been assumed that it would be impossible to achieve multilayered films of poly(hydroxy carboxylic acid)s and polyethylene without using a compatibilising agent or an additional tie layer to avoid delamination, especially in view of the differences in polarity of these two components. However, surprisingly this is not the case when polyethylene prepared with a single-site catalyst is used. In this case, the layers are sufficiently compatible such that they do not delaminate easily. Adherence between the layers is significantly improved.

### The poly(hydroxy carboxylic acid)

The poly(hydroxy carboxylic acid) can be any polymer wherein the monomers are derived from renewable resources and comprise at least one hydroxyl group and at least one carboxyl group. The hydroxy carboxylic acid monomer is preferably obtained from renewable resources such as corn and sugar cane or other sugar- or starch-producing plants. Preferably the poly(hydroxy carboxylic acid) used in the invention is preferably obtained from renewable resources. The term "poly(hydroxy carboxylic acid)" includes homo- and copolymers herein and blends of one or more of such polymers.

The poly(hydroxy carboxylic acid) can be represented as in Formula I: 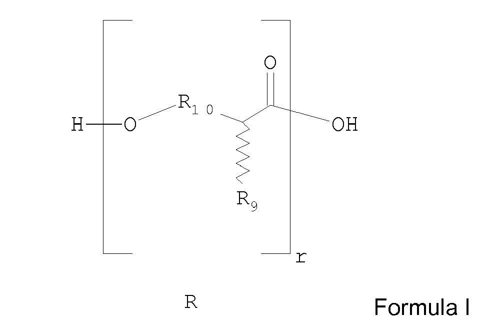 wherein
- R9 is hydrogen or a branched or linear alkyl comprising from 1 to 12 carbon atoms;
- R10 is optional and can be a branched, cyclic or linear alkylene chains comprising from 1 to 12 carbon atoms; and
- "r" represents the number of repeating units of R and is any integer from 30 to 15000.

The monomeric repeating unit is not particularly limited, as long as it is aliphatic and has a hydroxyl residue and a carboxyl residue. Examples of possible monomers include lactic acid, glycolic acid, 3-hydroxybutyric acid, 4-hydroxybutyric acid, 4-hydroxyvaleric acid, 5-hydroxyvaleric acid and 6-hydroxycaproic acid to make for example poly(lactic acid), poly(glycolic acid), poly(3-hydroxybutyric acid), poly(4-hydroxybutyric acid), poly(4-hydroxyvaleric acid), poly(5-hydroxyvaleric acid) and poly(6-hydroxycaproic acid), respectively.

The monomeric repeating unit may also be derived from a cyclic monomer or cyclic dimer of the respective aliphatic hydroxycarboxylic acid. Examples of these include lactide, glycolide, β-propiolactone, β-butyrolactone, γ-butyrolactone, γ-valerolactone, δ-valerolactone, ε-caprolactone and the like.

In the case of asymmetric carbon atoms within the hydroxy carboxylic acid unit, each of the D-form and the L-form as well as mixtures of both may be used. Racemic mixtures can also be used.

The poly(hydroxy carboxylic acid) may optionally comprise one or more comonomer(s).

The comonomer can be a second different hydroxycarboxylic acid as defined above in Formula I. The weight percentage of each hydroxycarboxylic acid is not particularly limited.

The comonomer can also comprise dibasic carboxylic acids and dihydric alcohols. These react together to form aliphatic esters, oligoesters or polyesters as shown in Formula II, having a free hydroxyl end group and a free carboxylic acid end group, capable of reacting with hydroxy carboxylic acids, such as lactic acid and polymers thereof. 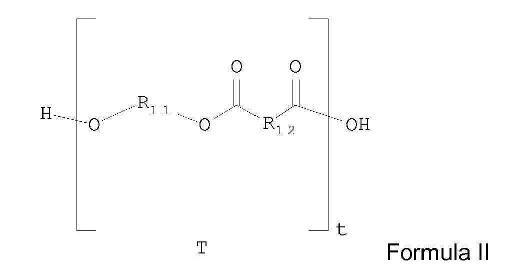 wherein
- R11 and R12 are branched or linear alkylenes comprising from 1 to 12 carbon atoms and can be the same or different;
- "t" represents the number of repeating units T and is any integer of at least 1

These copolymers are also within the scope of the invention. The sum of the number of repeating units "r" (Formula I) and "t" (Formula II) is any integer from 30 to 15000. The weight percentages of each monomer i.e. the hydroxycarboxylic acid monomer and the aliphatic ester, oligoester or polyester comonomer of Formula II are not particularly limited. Preferably, the poly(hydroxy carboxylic acid) comprises at least 50 % by weight (wt %) of hydroxycarboxylic acid monomers and at most 50 wt % of aliphatic ester, oligoester or polyester comonomers.

The dihydric alcohols and the dibasic acids that can be used in the aliphatic polyester unit as shown in Formula II are not particularly limited. Examples of possible dihydric alcohols include ethylene glycol, diethylene glycol, triethyleneglycol, propylene glycol, dipropylene glycol, 1,3-butanediol, 1,4-butanediol, 3-methyl-1,5-pentanediol, 1,6-hexanediol, 1,7-octanediol, 1,9-nonanediol, neopentyl glycol, 1,4-cyclohexanediol, isosorbide and 1,4-cyclohexane dimethanol and mixtures thereof.

Aliphatic dibasic acids include succinic acid, oxalic acid, malonic acid, glutaric acid, adipic acid, pimelic acid, suberic acid, azelaic acid, sebacic acid; undecanoic diacid, dodecanic diacid and 3,3-dimethylpentanoic diacid, cyclic dicarboxylic acids such as cyclohexanedicarboxylic acid and mixtures thereof. The dibasic acid residue in the hydroxy carboxylic acid copolymer can also be derived from the equivalent diacylchlorides or diesters of the aliphatic dibasic acids.

In the case of asymmetric carbon atoms within the dihydric alcohol or the dibasic acid, the D-form and the L-form, as well as mixtures of both, may be used. This includes the possibility of using racemic mixtures.

The copolymer can be an alternating, periodic, random, statistical or block copolymer.

Polymerisation can be carried out according to any method known in the art for polymerising hydroxy carboxylic acids. Polymerisation of hydroxy carboxylic acids and their cyclic dimers is carried out by polycondensation or ring-opening polymerisation, respectively.

Copolymerisation of hydroxycarboxylic acids can be carried out according to any method known in the art. The hydroxycarboxylic acid can be polymerised separately prior to copolymerisation with the comonomer or both can be polymerised simultaneously.

In general, the poly(hydroxy carboxylic acid), homo- or copolymer (copolymerised with a second different hydroxy carboxylic acid or with an aliphatic ester or polyester as described above), may also comprise branching agents. These poly(hydroxy carboxylic acid)s can have a branched, star or three-dimensional network structure. The branching agent is not limited so long as it comprises at least three hydroxyl groups and/or at least three carboxyl groups. The branching agent can be added during polymerisation. Examples include polymers such as polysaccharides, in particular cellulose, starch, amylopectin, dextrin, dextran, glycogen, pectin, chitin, chitosan and derivates thereof. Other examples include aliphatic polyhydric alcohols such as glycerine, pentaerythritol, dipentaerythritol, trimethylolethane, trimethylolpropane, xylitol, inositol and the like. Yet another example of a branching agent is an aliphatic polybasic acid. Such acids include cyclohexanehexacarboxylic acid, butane-1,2,3,4-tetracarboxylic acid, 1,3,5-pentane-tricarboxylic acid, 1,1,2-ethanetricarboxylic acid and the like.

The total molecular weight of the poly(hydroxy carboxylic acid) depends on the desired mechanical and thermal properties of the final resin composition. It is preferably from 5,000 to 1,000,000 g/mol, more preferably from 10,000 to 500,000 g/mol and even more preferably from 35,000 to 200,000 g/mol. Most preferably the total molecular weight of the polymer is from 50,000 to 150,000 g/mol.

The molecular weight distribution is generally monomodal. However, in the case of mixtures of two or more fractions of poly(hydroxy carboxylic acid)s of different weight average molecular weight and/or of different type, the molecular weight distribution can also be multimodal e.g. bi- or trimodal.

From a standpoint of availability, transparency, the renewability and compostability, the poly(hydroxy carboxylic acid) is preferably a poly(lactic acid) (PLA). Preferably the poly(lactic acid) is a homopolymer obtained either directly from lactic acid or from lactide, preferably from lactide.

Thus, preferably the poly(hydroxy carboxylic acid) that is selected is biodegradable and more preferably compostable, for example PLA.

### The polyethylene

The polyethylenes used in this invention are prepared using single-site catalysts, preferably metallocene catalysts.

The term "polyethylene" herein includes homopolymers and copolymers having α-olefin comonomers. The term "polyethylene" herein also includes blends of two or more polyethylenes as defined below.

If the polyethylene is a copolymer, the comonomer can be any α-olefin i.e. any 1-alkylene comprising from 2 to 12 carbon atoms, for example, ethylene, propylene, 1-butene, and 1-hexene. The copolymer can be an alternating, periodic, random, statistical or block copolymer.

Preferably, the polyethylene used in the resin composition of the invention is a homopolymer or a copolymer of ethylene and either butene or hexene.

The ethylene is polymerised at low-pressure in the presence of a single-site catalyst. Preferably, the catalyst is a metallocene catalyst. If required, more than one catalyst of the same or different type can be used, either simultaneously in one reactor, in two parallel reactors or in two reactors connected to each other in series, to obtain multimodal or broader molecular weight distributions.

Low-pressure polymerised polyethylene has low concentrations of long chain branching, giving it strong intermolecular forces and high tensile strength. Low-pressure polymerised ethylene can be broadly categorised as linear low density (LLDPE), medium density (MDPE) and high density (HDPE) polyethylene, the density being mainly regulated by the relative amount of comonomer added; the more comonomer that is added, the higher the degree of short chain branching and the lower the density. Preferably, the comonomer is propylene, 1-butene or 1-hexene. More preferably the comonomer is 1-butene or 1-hexene.

The overall properties of the polyethylene are dependent on the method and type of single-site catalyst used. A single-site catalyst is for example a metallocene catalyst or a constrained geometry catalyst. It has been found that poly(hydroxy carboxylic acid)s are more compatible with single-site catalysed polyethylene, in particular metallocene-catalysed polyethylene, than with Ziegler-Natta- or chromium-catalysed polyethylene. Multilayered films wherein at least one layer comprises a single-site catalysed polyethylene, like a metallocene-catalysed polyethylene, and at least one adjacent layer comprises poly(hydroxy carboxylic acid)s, like PLA, have good compatibility and adherence. Therefore the layers do not delaminate from one another easily. Suitable metallocene catalysts for ethylene polymerisation include, by way of example, metallocenes with indenyl ligands and in particular tetrahydroindenyl ligands.

Preferably, the metallocene-catalysed polyethylene used in the present invention is produced with a metallocene of one of the following general formulas:

R(IND)₂ MQ_{Z-2} formula (I)

R (THI)₂ MQ_{Z-2} formula (II)

wherein:
○ IND is an indenyl group which may be substituted or not,
○ THI is a tetrahydrogenated indenyl group which may be substituted or not,
○ R is a substituted or unsubstituted C₁-C₄ alkylidene radical, a dialkyl germanium, a dialkyl silicon, a diaryl silicon, a di-alkoxysilane, a diphenoxysilane, or an alkyl phosphine or amine radical bridging two tetrahydrogenated indenyl groups,
○ Q is a hydrocarbyl radical such as aryl, alkyl, alkenyl, alkylaryl, or arylalkyl radical having from 1-20 carbon atoms, hydrocarboxy radical having 1-20 carbon atoms or halogen and can be the same or different from each other,
○ M is a group IVb, Vb or Vlb transition metal, and
○ Z is the valence of the transition metal.

Preferably, THI is an unsubstituted tetrahydrogenated indenyl group.

Preferably, IND is an unsubstituted indenyl group.

Preferably, M is a group IVb transition metal, more preferably M is zirconium.

Preferably, Q is an alkyl radical having from 1-4 carbon atoms or a halogen, more preferably Q is methyl or chlorine.

Preferably, R is a substituted or unsubstituted C₁-C₄ alkylidene radical, more preferably ethylidene or isopropylidene.

Some suitable examples include bridged bis(tetrahydroindenyl) zirconium dichloride, such as ethylene bis(tetrahydroindenyl) zirconium dichloride; bridged bis(indenyl) zirconium dichloride, such as ethylene bis(indenyl) zirconium dichloride; and bis(n-butylcyclopentadienyl) zirconium dichloride and mixtures thereof.

Compared to other polyethylenes, single-site catalysed polyethylene, in particular metallocene-catalysed polyethylene, has a much narrower molecular weight distribution. Preferably, the molecular weight distribution is at most 6, more preferably at most 4, even more preferably at most 3.5, most preferably at most 3. The narrow molecular weight distribution is surprisingly compatible with the similarly narrow molecular weight distribution of poly(hydroxy carboxylic acid)s.

Without wishing to be bound by theory, it is thought that the molecular structure of single-site catalysed polyethylene, in particular metallocene-catalysed polyethylene, induces a better compatibility with poly(hydroxy carboxylic acid)s. The incorporation of comonomers, if present, occurs very regularly along the polyethylene backbone resulting in a highly uniform distribution of comonomers i.e. short chain branching is very regular. This effect (known as very narrow "short chain branching distributions" (SCBD)) in polyethylenes is specific to single-site catalysed polyethylenes, in particular metallocene-catalysed polyethylenes. As a result of the narrow SCBD, during crystallisation from the melt, very small crystallites are formed throughout the material, thus providing excellent optical clarity. Ziegler-Natta and chromium-catalysed polyethylenes on the other hand, have poor and very random comonomer incorporation. Therefore, during crystallisation a broad distribution of different sizes of crystallites is obtained, resulting in high haze values.

The Applicant believes, without wishing to be bound by theory, that since the molecular architecture of poly(hydroxy carboxylic acid)s is similar to that of single-site catalysed polyethylene (in particular metallocene-catalysed polyethylene), i.e. narrow molecular weight distribution, poly(hydroxy carboxylic acid)s are more compatible with single-site catalysed polyethylene, in particular metallocene-catalysed polyethylene, than with other polyethylenes.

Additionally, additives can be included in one or more layers of the multilayer film. Such additives are well known in the art, and can include, for example: antioxidants (e.g., hindered phenolics such as IRGANOX™ 1010 or IRGANOX™ 1076 available from Ciba™); phosphites (e.g. IRGAFOS™ 168 available from Ciba™); anti-cling additives; tackifiers, such as polybutenes, terpene resins, aliphatic and aromatic hydrocarbon resins, alkali metal and glycerol stearates and hydrogenated rosins; UV stabilizers; heat stabilizers; anti-blocking or slip agents; release agents; anti-static agents; anti-fog agents; pigments; colorants; carbon black; dyes; waxes; silica; fillers; talc, anti-acid compounds; peroxides; grafting agents; lubricants; clarifying agents; nucleating agents and the like.

### Multilayer film

The multilayer film with at least
- a first layer comprising a poly(hydroxy carboxylic acid) and
- at least a second layer adjacent to the first layer comprising a polyethylene, prepared with a single-site catalyst, preferably a metallocene catalyst
can be prepared according to any known method in the art. The multilayer film is preferably prepared by coextruding the resin or resin blend of each layer, so that upon extrusion they adhere together to form the multilayer film. Co-extrusion is a process well-known to the skilled person.

Although, the invention discloses in detail the first and second layers, by multilayer film it is to be understood a film comprising from two up to eight layers. A multilayer film can thus comprise 2, 3, 4, 5, 6, 7 or 8 layers, wherein one or more of the layers can be of the same composition.

Due to the improved mechanical properties stemming from the presence of a layer of polyethylene, as well as the presence of material from renewable resources resulting from the presence of poly(hydroxy carboxylic acid), a multilayer film of superior quality can be obtained, where surprisingly the two layers are compatible and adhere well to one another.

Advantageously, the first layer comprises at least 50 wt %, preferably at least 75 wt%, more preferably at least 80 wt% of a poly(hydroxy carboxylic acid), and/or the second layer comprises at least 50 wt%, preferably at least 75 wt%, more preferably at least 80 wt% of a polyethylene prepared with a single-site catalyst, preferably a metallocene.

Accordingly, each layer can also comprise a blend of the prescribed resin with other suitable polymeric resins. For example, the first layer comprising poly(hydroxy carboxylic acid) can be made from a resin blend comprising poly(hydroxy carboxylic acid) and one or more suitable polymers, selected for example from polypropylene, polystyrene, polyethylene including high-pressure polymerised low-density polyethylene (LDPE), linear low density polyethylene (LLDPE), medium density polyethylene (MDPE) or high density polyethylene (HDPE). The second adjacent layer comprising the polyethylene, prepared with a single-site catalyst, preferably a metallocene, can be a blend of the said polyethylene with one or more suitable polymeric resins, selected for example from polypropylene, polystyrene, and a different polyethylene including high-pressure polymerised low-density polyethylene (LDPE), linear low density polyethylene (LLDPE), medium density polyethylene (MDPE) or high density polyethylene (HDPE).

According to another embodiment, the first layer consists essentially of a poly(hydroxy carboxylic acid) and/or the second layer consists essentially of a polyethylene, prepared with a single-site catalyst, in particular a metallocene catalyst.

According to another embodiment, the first and second layers are the same i.e. both comprise equal amounts of poly(hydroxy carboxylic acid) and polyethylene prepared with a single-site catalyst.

The multilayer film comprises from 1 to 99 wt % of poly(hydroxy carboxylic acid), preferably from 5, 10, 20, 25, 30, 40 or 45 wt % up to 50, 60, 70, 75, 80 or 90 wt %. Most preferably, the multilayer film comprises from 40 to 60 wt% of poly(hydroxy carboxylic acid). Accordingly, the multilayer film comprises from 1 to 99 wt % of polyethylene, preferably from 5, 10, 20, 25, 30, 40 or 45 wt % and up to 50, 60, 70, 75, 80 or 90 wt %. Most preferably, the multilayer film comprises from 40 to 60 wt% of polyethylene, prepared with a single-site catalyst, in particular a metallocene catalyst. Most preferably, the multilayer film essentially consists of about 50 wt% of polyethylene, prepared with a single-site catalyst, in particular a metallocene catalyst, and of about 50 wt% of poly(hydroxy carboxylic acid).

In a preferred embodiment, according to the invention, the multilayer film does not require a compatibiliser/tie layer for adhering the layer comprising polyethylene, prepared with a single-site catalyst, in particular a metallocene catalyst, with the layer comprising poly(hydroxy carboxylic acid) or vice versa. Each individual layer is also free of compatibilising agents for compatibilising polyethylene with poly(hydroxy carboxylic acid).

All of the layers of the multilayer film, including layers other than the first and second layer according to the invention, can be the same or different in chemical composition, density, melt index, thickness, depending upon the desired final properties of the film and its application. Each layer can comprise resins comprising poly(hydroxy carboxylic acid), for example PLA, and/or polyethylene, for example, high-pressure polymerised low-density polyethylene (LDPE), LLDPE, MDPE or HDPE, including those prepared with a single-site catalyst, in particular a metallocene catalyst, and/or polystyrene and/or polypropylene. Further, one skilled in the art will understand that the layers of a multilayer film must have the appropriate viscosity match.

According to a preferred embodiment, the multilayer film consists of three layers having a sandwich structure: A / B / A. Layers A being layers comprising poly(hydroxy carboxylic acid) and layer B comprising polyethylene, prepared with a single-site catalyst, preferably a metallocene catalyst. In particular, external layers A preferably comprise at least 50 wt% of poly(hydroxy carboxylic acid) and core layer B preferably comprises at least 50 wt% of polyethylene, prepared with a single-site catalyst, preferably a metallocene catalyst.

According to another embodiment, the multilayer film consists of three layers having a sandwich structure: B / A / B, wherein external layers B preferably comprise at least 50 wt% of polyethylene, prepared with a single-site catalyst, preferably a metallocene catalyst and core layer A preferably comprises at least 50 wt% of poly(hydroxy carboxylic acid).

The thickness of each layer of the film and of the overall film, are not particularly limited, but are determined according to the desired properties of the film. Preferably each film layer has a thickness of about 1 to 750 µm, more preferably 1 to 500 µm and most preferably about 1 to 100 µm, depending on the final application of the multilayer film. For example, the layer comprising poly(hydroxy carboxylic acid) may need to be thicker for some applications requiring higher barrier properties. The layer comprising polyethylene prepared with a single-site catalyst, preferably a metallocene, may need to be thicker or thinner to get the desired mechanical and physical properties. The thickness of each layer can be adjusted to achieve the desired result.

Preferably, the multilayer film has an overall thickness of 1 to 1000 µm, more preferably 1 to 500 µm and even more preferably 1 to 300 µm. Most preferably, the multilayer film is 10 to 150 µm thick.

The multilayer film of the present invention may be formed by any number of well-known coextrusion techniques to make a cast or blown film. Any of the blown or chill roll techniques commonly used are suitable. For example, the resins of each layer can be co-extruded in a molten state through a flat die and then cooled to form the multilayer film. Alternatively, the resins of each layer can be co-extruded in a molten state through an annular die and then blown and cooled to form a tubular, blown film, which can then be axially slit and unfolded to form a flat multilayer film.

According to one embodiment, multilayer cast films can be prepared using a pilot scale commercial cast film line machine as follows. Pellets of the respective polymers or polymer blends are melted at a temperature ranging from about 150°C to 290°C, preferably 220°C to about 270°C, with the specific melt temperature being chosen to match melt viscosities of the particular resins. In the case of a multilayer cast film, the two or more different melts are conveyed to a coextrusion adapter that combines the two or more melt flows into a multilayer, coextruded structure. This layered flow is distributed through a single manifold film extrusion die to the desired width. The die gap opening is typically within the range of 250 to 750µm, preferably about 600µm. The material is then drawn down to the final gauge. The material draw down ratio is preferably 15:1 to 25:1, more preferably about 21:1 for 20 µm films. A vacuum box or air knife can be used to pin the melt exiting the die opening to a primary chill roll maintained at a temperature less than 35°C, preferably about 32°C. The resulting polymer film is collected on a winder. The film thickness can be monitored by a gauge monitor, and the film can be edge trimmed by a trimmer. One or more optional treaters can be used to surface treat the film, if desired. Such chill roll casting processes and apparatus are well known in the art, and are described, for example, in The Wiley Encyclopedia of Packaging Technology, Second Edition, A. L. Brody and K. S. Marsh, Ed., John Wiley and Sons, Inc., New York (1997). Although chill roll casting is one example, other forms of casting can be used.

According to another embodiment, multilayer blown films can be prepared as follows. The multilayer film can be for instance produced using a blown film line using a coextrusion feedblock and die assembly to yield a film with two or more layers adhered together but differing in composition. The die has a die gap of 1.0-2.0 mm, preferably 1.2 mm, a die diameter of 1-100 mm, preferably 50mm and a length to diameter ratio of 25. The blow-up ratio (BUR) can range from 1.0 to 10.0, preferably from 1.0 to 5.0, most preferably from 1.3 to 3.5. The film can then be extruded through the coextrusion feedblock and die assembly into a film and cooled, for example by blowing air onto the surface of the film. In industrial processes, the film is then preferably drawn from the die to form a cylindrical film that is cooled, collapsed and optionally subjected to a desired auxiliary process, such as slitting, treating, sealing or printing. The finished multilayer film can be wound into rolls for later processing and converting.

In yet another embodiment of the invention, a multilayer film may also be formed by extrusion coating whereby a substrate material is contacted with the hot molten polymer as the polymer exits the die. Either the resin comprising poly(hydroxy carboxylic acid) or the resin comprising polyethylene can be used as the substrate material i.e. the initial layer onto which the coating is applied. For instance, an already formed polyethylene-comprising film may be extrusion coated with a poly(hydroxy carboxylic acid), such as poly(lactic acid), as the latter is extruded through the die or vice versa. Extrusion coatings are preferably processed at higher temperatures than cast films in order to promote adhesion of the extruded material to the substrate. Other extrusion coating processes are known in the art.

Alternatively, the multilayer film can be obtained using tubular water quench extrusion processes.

### Use of the films

There are many potential applications for the films produced from the polymer blends described herein. These films can be made into other forms, such as tape, by any one of a number of well-known cutting, slitting, and/or rewinding techniques. They may be useful as stretch, sealing, or oriented films.

Films according to the invention can be used as cling films, stretch films, shrink films, bags, lamination films, liners, diaper films, candy wrappers or for a variety of other suitable end-use applications that will be apparent to those skilled in the art. The films can also be applied in packaging material, such as for bundling and unitizing a variety of products; flexible food packaging, including frozen food packaging; bags, such as trash bags and bin liners, industrial liners, shipping sacks and produce bags; and surface protection applications, with or without stretching, such as in the temporary protection of surfaces during manufacturing or transportation.

The content of poly(hydroxy carboxylic acid) within the film of the invention renders it partially compostable.

Compostability is herein defined as provided by the standard EN 13432:2000. In order for packaging material to be biodegradable it must have a lifecycle, which can be described as follows:
- a period of storage and/or use starting from time to, which is the moment the material comes off the production line;
- a period of disintegration starting at time t₁, during which the polymer begins to significantly chemically disintegrate e.g. via the hydrolysis of ester bonds;
- a period of biodegradation, during which the partly hydrolysed polymer biologically degrades as a result of the action of bacteria and micro organisms;

It is important to make the distinction between **degradable, biodegradable** and **compostable** as often these terms are used interchangeably. In addition to the above, a *compostable* plastic is "capable of undergoing biological decomposition in a compost site as part of an available program, such that the plastic is not visually distinguishable and breaks down to carbon dioxide, water, inorganic compounds, and biomass, *at a rate consistent with known compostable materials (e.g. cellulose) and leaves no toxic residue*" (ASTM definition). On the other hand a *degradable* plastic is one which is merely chemically changed i.e. there is no requirement for the plastic to be biologically degraded by microorganisms. Therefore, a degradable plastic is not necessarily biodegradable and a biodegradable plastic is not necessarily compostable (that is, it breaks down too slowly and/or leaves toxic residue).

In particular, the EN 13432:2000 standard for compostability has the following main features:
- Disintegration is measured by sieving the material to determine the biodegraded size. To be considered compostable, less than 10% of the material should be larger than 2mm in size.
- Biodegradability is determined by measuring the amount of carbon dioxide produced over a certain time period by the biodegrading plastic. To be considered compostable, it must be 90% biodegraded within 90 days.
- Eco-toxicity is measured by determining whether the concentration of heavy metals is below the limits set by the standard and by testing plant growth by mixing the compost with soil in different concentrations and comparing it with controlled compost.

The following are non-limiting examples illustrating the invention.

### EXAMPLES

PLA Terramac® 6201 was co-extruded with different polyethylene resins, metallocene-catalysed polyethylene (mPE), ethylene vinyl acetate polymer (EVA), and high pressure polymerised low density polyethylene (LDPE) on a coextrusion blown film extruder, i.e. Collin blown film extruder, at a throughput of 12 kg/h, using proportions 25%-50%-25%, with a length to diameter ratio of 25, a die diameter of 50 mm, a die gap of 1.2 mm and a blow-up ratio (BUR) of 1.3-3.5, to form 3-layered films "A" (according to the invention), "B" and "C"(comparative examples), respectively. Layers of PLA are extruded on either side of the polyethylene film to form a multilayer film comprising layers PLA/PE/PLA, wherein the polyethylene-based layer is sandwiched between two layers of PLA.

The properties of the individual components are provided in Table 1.

**Table 1**

| | **mPE** | **EVA** | **LDPE** | **PLA** |
|---|---|---|---|---|
| **Density / g/cm³** | 0.923 | / | 0.924 | 1.26 at 23°C |
| **Melt index M12 / g/10 min** | 0.9 | 0.75 | 0.8 | 9-10 at 233 ppm H₂0 |
| | | | | 18-20 at 1000 ppm H₂0 |
| **MW / Da** | 88000 | 80000 | 90000 | 106940 |
| **MWD** | 2.7 | 4.5 | 5.4 | 1.75 |
| **CH₃ / 1000C** | 9.6 | N/A | 23.7 | N/A |
| **C₄H₉ / 1000C** | 7.8 | N/A | N/A | N/A |
| **Hexene** | 4.7 | N/A | N/A | N/A |
| **comonomer / wt %** | | | | |
| **VA** | N/A | 17 | N/A | N/A |
| **comonomer / wt%** | | | | |

| | | | | |
|---|---|---|---|---|
| N/A = not applicable | | | | |

Densities of the polyethylenes and of the PLA were measured according to ASTM D 1505.
Melt indices MI2 for polyethylene were measured according to ASTM D 1238, i.e. at 190°C using a load of 2.16 kg, and according to the same standard for PLA, except the measurements were carried out once in the presence of 233 ppm water and once in the presence of 1000 ppm water.
MW and MWD for PLA and the polyethylenes were determined using GPC, where the PLA was dissolved in choloform and measurements were taken at 25°C.
Short chain branching indices of CH₃ and C₄H₉ of polyethylene were assessed using NMR.
Hexene comonomer weight percentage of the metallocene-catalysed polyethylene was determined using NMR.

All films had a thickness of 100µm. The properties measured for the films "A", "B" and "C" are provided in Table 2 below. It can be seen that the PLA layer and the mPE layer are compatible, the metallocene-catalysed polyethylene being much more compatible with PLA than the high-pressure polymerised LDPE and EVA, since a lot more force is required to peel apart the PLA layer from the mPE layer i.e. delamination than from the EVA or LDPE layers in films B and C, respectively.

Adherence of PLA to the polyethylene is greatly improved by using a metallocene-catalysed polyethylene instead of polyethylene such as EVA or LDPE.

**Table 2**

| | **FILM A** | **FILM B** | **FILM C** |
|---|---|---|---|
| | **PLA / mPE / PLA** | **PLA / EVA / PLA** | **PLA / LDPE/ PLA** |
| **Relative weight** | 25/50/25 | 25/50/25 | 25/50/25 |
| **amount of each layer** | | | |

| **Blocking test** | | | |
|---|---|---|---|
| Force max (N) | 2.37 | 2.23 | 1.29 |
| Standard deviation | 0.41 | 0.16 | 0.34 |

| **Delamination test** | | | |
|---|---|---|---|
| Peeling at 60° angle (N) | 0.0167 | 0.0142 | 0.0081 |
| Standard deviation | 0.001 | 0.0016 | 0.0009 |

## Claims

1. A multilayer film comprising a first layer comprising a poly(hydroxy carboxylic acid) and a second layer adjacent to the first layer comprising polyethylene prepared with a single-site catalyst, preferably a metallocene catalyst.

2. The multilayer film according to claim 1 wherein the first layer comprises at least 50 % by weight of the poly(hydroxy carboxylic acid).

3. The multilayer film according to claim 1 or 2 wherein the second layer comprises at least 50 % by weight of the polyethylene prepared with a single-site catalyst, preferably a metallocene catalyst.

4. The multilayer film according to any one of claims 1 to 3 wherein the molecular weight distribution of the polyethylene resin is at most 3.5, preferably at most 3.0.

5. The multilayer film according to any one of claims 1 to 4 wherein polyethylene was prepared with a bridged bis(tetrahydroindenyl) zirconium dichloride metallocene catalyst, preferably ethylene bis(tetrahydroindenyl) zirconium dichloride.

6. The multilayer film according to any one of claims 1 to 5 wherein the poly(hydroxy carboxylic acid) is poly(lactic acid).

7. The multilayer film according to any one of claims 1 to 6 wherein the poly(lactic acid) is a copolymer and the comonomers are chosen from one or more of:
- aliphatic hydroxy carboxylic acids other than lactic acid such as glycolic acid, 3-hydroxybutyric acid, 4-hydroxybutyric acid, 4-hydroxyvaleric acid, 5-hydroxyvaleric acid, 6-hydroxycaproic acid and the like
- aliphatic polyesters of dihydric alcohols and dibasic carboxylic acids

8. A process for preparing a multilayer film according to any one of claims 1 to 7 comprising the step co-extruding the first layer with the second layer to form the multilayer film.

9. Use of the multilayer film according to any one of claims 1 to 7 as packaging material.

10. Use of the multilayer film according to any one of claims 1 to 7 as cling films, stretch films, shrink films, bags, lamination films, liners and diaper films.
